# EUROPÄISCHE PATENTSCHRIFT

(11) **EP 1 170 197 B1**
(45) Veröffentlichungstag und Bekanntmachung des Hinweises auf die Patenterteilung: **14.04.2004**
(21) Anmeldenummer: 01114942.4
(22) Anmeldetag: 20.06.2001
(51) Int. Cl.: B62D 25/04

(54) **Aus mindestens zwei Säulenabschnitten bestehende Mittelsäule einer Kraftfahrzeugkarosserie**
Central pillar for the bodywork of a motorcar, consisting of at least two pillar sections
Colonne centrale d'une carrosserie de véhicule automobile , comprenant au moins deux sections de colonne

(30) Priorität: 06.07.2000 DE 10032971
(43) Veröffentlichungstag der Anmeldung: 09.01.2002
(73) Patentinhaber: Bayerische Motoren Werke Aktiengesellschaft, 80809 München (DE)
(72) Erfinder: Mieslinger, Stefan, 84034 Landshut (DE); Rill, Roland, 80807 München (DE)

(56) Entgegenhaltungen:
- DE-A- 19 948 363
- FR-A- 2 642 032
- US-A- 5 246 264
- US-A- 5 671 968
- PATENT ABSTRACTS OF JAPAN vol. 007, no. 217 (M-245), 27. September 1983 (1983-09-27) & JP 58 112877 A (TAKADA KOGYO KK), 5. Juli 1983 (1983-07-05)

## Beschreibung

Die Erfindung bezieht sich auf eine aus mindestens zwei Säulenabschnitten bestehende Mittelsäule einer Kraftfahrzeugkarosserie der im Oberbegriff des Patentanspruchs 1 genannten und aus FR-A-2 642 032 hervorgehenden Art.

Eine aus Blech im Tiefziehverfahren gefertigte, einstückige Mittelsäule (B-Säule) benötigt im Bereich der Befestigungsstellen der Türscharniere entweder ein durchlaufendes oder zumindest aus mehreren Abschnitten bestehendes Blechverstärkungsteil. Hierdurch entsteht ein zusätzlicher Teile- und Fertigungsaufwand sowie ein erhöhtes Gewicht.

Die aus der DE 41 39 303 A1 hervorgehende, aus zwei Säulenabschnitten bestehende Mittelsäule ist ganz oder teilweise aus Leichtmetallgussteilen oder aus Leichtmetallstrangpressprofilen gefertigt, wobei am unteren Säulenabschnitt Freiräume für Anbauteile, wie Scharniere oder dergleichen vorgesehen sind. Die bekannte Mittelsäule ist jedoch insgesamt sehr kompliziert gestaltet und daher teuer herzustellen. Ferner können Leichtmetall- und Stahlblechteile nicht miteinander verschweißt werden.

Aufgabe der Erfindung ist es daher, eine aus zwei Säulenabschnitten bestehende Mittelsäule der im Oberbegriff des Patentanspruchs 1 genannten Art derart auszubilden, dass sie kostengünstig herstellbar ist, ein geringes Gewicht hat, mit anderen Stahlblechteilen zu verschweißen ist und ferner keine zusätzlichen Verstärkungen am Befestigungsbereich eines Türschamiers erforderlich sind.

Zur Lösung der Aufgabe sind die im Patentanspruch 1 dargelegten Merkmale vorgesehen.

Da die beiden Säulenabschnitte aus jeweils im Tiefziehverfahren gefertigten Blechpressteilen bestehen und ferner im Bereich wenigstens einer Scharnierbefestigung für die Türanlenkung überlappend angeordnet sind, kann durch die erfindungsgemäße Doppelung des Blechs der Säulenabschnitte vorteilhafterweise auf ein separates Verstärkungsblech verzichtet und damit Teile und Gewicht eingespart werden. Ferner ist auch im Bereich der Überlappung der Säulenabschnitte zwischen den Schrauben und den Durchgangsbohrungen ein Toleranzausgleich in Bezug auf die Gesamtlänge der Mittelsäule möglich, sodass deren beide Endbereiche passgenau mit dem Schweller bzw. mit dem Dachrahmen verbindbar sind.

Zweckmäßigerweise sind jedoch an den Blechpressteilen der beiden Säulenabschnitte zwei Befestigungsabschnitte für jeweils ein Scharnier ausgebildet und derart gestaltet, dass die beiden Befestigungsabschnitte beim Zusammenbau der Säulenabschnitte ineinandergreifen und dadurch festgelegt sind (Merkmale des Patentanspruchs 2).

Bei einer sich in der Karosserie eines Personenkraftwagens befindenden Mittelsäule ragt der freie Endbereich des untenliegenden Säulenabschnitts über die Türbrüstung hinaus, sodass die Mittelsäule bei einem Seitencrash hohen Belastungen Stand hält (Merkmale des Patentanspruchs 3).

Gemäß den Merkmalen des Patentanspruchs 4 wird die Mittelsäule in das außenliegende Seitenwandelement eingesetzt und dabei vom innenliegenden Seitenwandelement überdeckt.

Ein Ausführungsbeispiel der Erfindung ist in der Zeichnung dargestellt und wird im Folgenden erläutert. Es zeigt:
- Figuren 1 und 2: jeweils eine perspektivische Ansicht eines außenliegenden und eines innenliegenden Seitenwandelements,
- Figur 3: eine aus zwei Säulenabschnitten bestehende Mittelsäule mit zwei Befestigungsabschnitten,
- Figur 4: eine abgewandelte Ausführungsart von Figur 3.

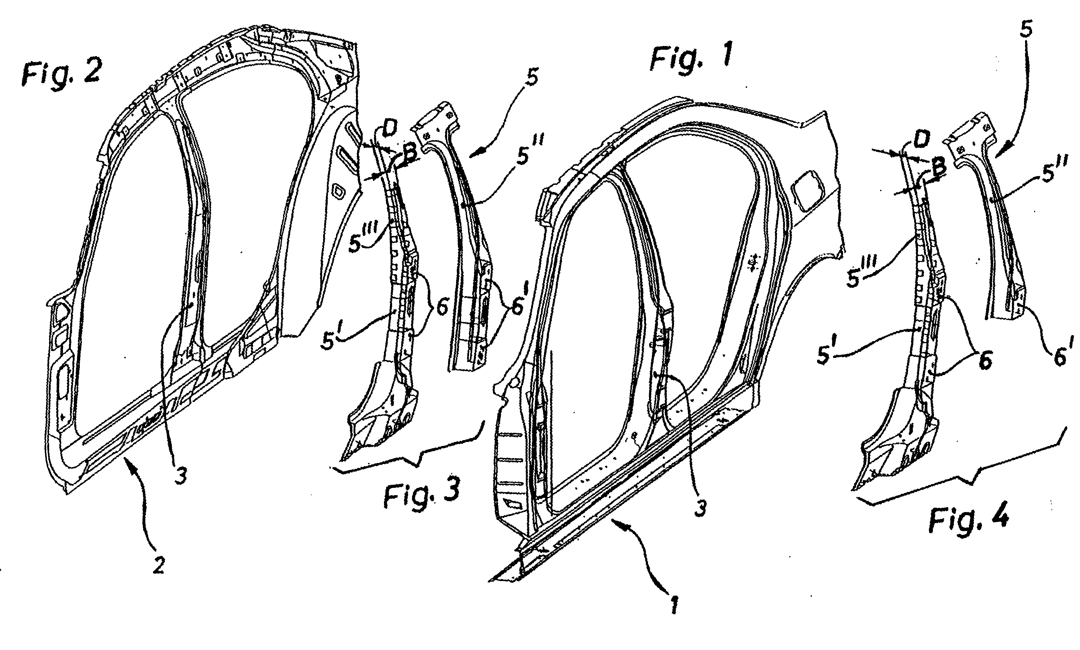

In den Figuren 1 und 2 ist ein außenliegendes und ein innenliegendes Seitenelement 1 und 2 dargestellt, die jeweils in ihrem Längsmittelbereich mit einem im Querschnitt etwa U-förmigen Abdeckteil 3 versehen sind. Von den beiden Abdeckteilen 3 wird die in den Figuren 3 und 4 dargestellte Mittelsäule 5 (B-Säule) in der sich zwischen den Seitenwandelementen 1 und 2 bestehenden Einbaulage überdeckt.

Die in den Figuren 3 und 4 dargestellte Mittelsäule 5 besteht jeweils aus einem untenliegenden Säulenabschnitt 5' und einem obenliegenden Säulenabschnitt 5", die jeweils aus im Tiefziehverfahren hergestellten Blechpressteilen bestehen. Ferner haben gemäß Figur 3 die beiden Säulenabschnitte 5' und 5" jeweils eine solche Längserstreckung, dass an ihnen jeweils zwei, im Abstand voneinander angeordnete Befestigungsabschnitte 6 ausgebildet werden können. Dabei ragen die am untenliegenden Säulenabschnitt 5' vorgesehenen Befestigungsabschnitte 6 jeweils Ober die angrenzenden außenliegenden Umfangswandungen des Säulenabschnitts 5' hinaus, während die am obenliegenden Säulenabschnitt 5" vorgesehenen Befestigungsabschnitte 6' in Bezug auf dessen innenliegende Umfangswandungen nach außen versetzt sind, sodass die Befestigungsabschnitte 6 des untenliegenden Säulenabschnitts 5' beim Zusammenbau mit dem obenliegenden Säulenabschnitt 5" in dessen Befestigungsabschnitte 6' formschlüssig eingreifen und sich dabei die Säulenabschnitte 5' und 5" überlappen. An den Befestigungsabschnitten 6 und 6' der Mittelsäule 5 wird jeweils ein Türschamier befestigt, wobei durch die Überlappung der Säulenabschnitte 5' und 5" im Bereich der Befestigungsabschnitte 6 und 6' eine doppelte Blechdicke vorhanden ist und dadurch bei Befestigung der Türscharniere keine zusätzlichen Verstärkungsbleche oder dergleichen erforderlich sind.

Bei dem in Figur 4 dargestellten Ausführungsbeispiel der Mittelsäule 5 ist am freien Endbereich des obenliegenden Säulenabschnitts 5" nur ein einziger Befestigungsabschnitt 6' vorgesehen. Dieser ist gleichartig wie die in Figur 3 dargelegten Befestigungsabschnitte 6' ausgebildet, sodass auch hier beim Zusammenbau der beiden Säulenabschnitte 5' und 5" im Bereich der Befestigungsabschnitte 6 und 6' zwei übereinander liegende Bleche vorhanden sind.

Die Mittelsäule 5 ist in die Seitenwandelemente 1 und 2 einer Personenkraftwagenkarosserie eingesetzt, wobei der untenliegende Säulenabschnitt 5' eine solche Längserstreckung hat, dass sein freier Endbereich 5''' sich etwa bis auf Höhe der Umlenkung des Sicherheitsgurts erstreckt, sodass auch in diesem Bereich bei zusammengebauten Säulenabschnitten 5' und 5" eine zweifache Blechdicke vorhanden ist und damit die Mittelsäule 5 einem nicht allzu starken Seitencrash Stand hält. Wie in den Figuren 3 und 4 ersichtlich, verjüngt sich der freie Endbereich 5"' des untenliegenden Säulenabschnitts 5' zu seinem freien Ende hin in der Breite B und in der Dicke D.

Die überlappend zusammengesetzten Säulenabschnitte 5' und 5" bilden die Mittelsäule 5, die schließlich in das nach innen offene U-förmige Abdeckteil 3 des außenliegenden Seitenelements 1 eingesetzt wird. Auf diesem wird daraufhin das innenliegenden Seitenelement 2 angebracht, wobei dessen Abdeckteil 3 die Mittelsäule 5 überdeckt.

## Patentansprüche

1. Aus mindestens zwei Säulenabschnitten bestehende Mittelsäule einer Kraftfahrzeugkarosserie, wobei die beiden, aus Blechpressteilen bestehenden Säulenabschnitte unter Bildung einer Überlappung verbunden sind,
**dadurch gekennzeichnet, dass** die Längserstreckung der beiden Säulenabschnitte (5' und 5") derart bemessen ist, dass sich ihre Überlappung im Bereich von mindestens einem Befestigungsabschnitt für eine Türlagerung befindet.

2. Mittelsäule nach Anspruch 1, **dadurch gekennzeichnet, dass** an den Blechpressteilen der beiden Säulenabschnitte (5' und 5") zwei, im Abstand voneinander angeordnete Befestigungsabschnitte (6 und 6') für jeweils ein Türschamier ausgebildet sind, wobei die beiden Befestigungsabschnitte beim Zusammenbau der beiden Säulenabschnitte (5' und 5") ineinander eingreifen.

3. Mittelsäule nach Anspruch 2, **dadurch gekennzeichnet, dass** bei der Karosserie eines Personenkraftwagens sich der freie Endbereich (5''') des untenliegenden Säulenabschnitts (5') der Mittelsäule (5) über die Türbrüstung hinaus erstreckt und sich dabei zu seinem freien Ende hin in Breite (B) und Dicke (D) verjüngt.

4. Mittelsäule nach Anspruch 3, **dadurch gekennzeichnet, dass** die Mittelsäule (5) in ein außenliegendes Seitenwandelement (1) eingesetzt und von einem innenliegenden Seitenwandelement (2) überdeckt ist.

## Claims

1. An at least two-part middle column of a vehicle body, wherein the two parts, made of compressed sheet-metal, are connected so as to overlap, **characterised in that** the length of the two column parts (5' and 5") is made such that the overlap is in the neighbourhood of at least one fastening part for a door sill.

2. A middle column according to claim 1, **characterised in that** two spaced-apart fastening parts (6, 6') for respective door hinges are formed on the two sheet-metal column parts (5', 5"), wherein the two fastening parts interlock when the two column parts (5', 5") are fitted together.

3. A middle column according to claim 2, **characterised in that** in the case of a passenger-car body, the free end region (5''') of the bottom part (5') of the middle column (5) extends beyond the door breast and its free end tapers in width (B) and thickness (D).

4. A middle column according to claim 3, **characterised in that** the middle column (5) is inserted into an outer side wall element (1) and covered by an inner side wall element (2).

## Revendications

1. Colonne centrale d'une carrosserie de véhicule automobile comprenant au moins deux sections de colonne, dans laquelle les deux sections de colonne composées par des éléments pressés en tôle sont reliées par l'intermédiaire de la formation d'un chevauchement,
**caractérisée en ce que**
l'étendue longitudinale des deux sections de colonne (5' et 5") est mesurée de telle sorte que leur chevauchement se trouve au niveau d'au moins une section de fixation pour un positionnement de porte.

2. Colonne centrale selon la revendication 1,
**caractérisée en ce que**
deux sections de fixation (6 et 6') disposées à distance l'une de l'autre sont configurées sur les éléments pressés en tôle des deux sections de colonne (5' et 5") pour une charnière de porte respective, les deux sections de fixation s'engageant l'une dans l'autre au moment de l'assemblage des deux sections de colonne (5' et 5").

3. Colonne centrale selon la revendication 2,
**caractérisée en ce que**
la zone d'extrémité libre (5''') de la section de colonne inférieure (5') de la colonne centrale dépasse l'allège de la porte dans la carrosserie d'un véhicule automobile et se raccourcit vers son extrémité libre dans la largeur (B) et dans l'épaisseur (D).

4. Colonne centrale selon la revendication 3,
**caractérisée en ce que**
la colonne centrale (5) est engagée dans l'élément de paroi latérale (1) externe et recouvert par un élément de paroi latérale interne (2).
